# FASCICULE DE BREVET EUROPEEN

(11) **EP 3 667 050 B1**
(45) Date de publication et mention de la délivrance du brevet: **01.09.2021**
(21) Numéro de dépôt: 19208659.3
(22) Date de dépôt: 12.11.2019
(51) Int. Cl.: F02K 1/64, F02K 1/72

(54) **TURBORÉACTEUR DOUBLE FLUX COMPORTANT UNE SÉRIE DE LAMES ROTATIVES POUR OBTURER LA VEINE DU FLUX SECONDAIRE**
MANTELSTROM-TURBOTRIEBWERK, DAS EINE REIHE VON ROTIERENDEN BLÄTTERN UMFASST, UM DEN KANAL DES SEKUNDÄRSTROMS ABZUDICHTEN
DUAL-FLOW TURBOJET ENGINE COMPRISING A SERIES OF ROTARY STRIPS FOR BLOCKING THE SECONDARY FLOW STREAM

(30) Priorité: 13.12.2018 FR 1872841
(43) Date de publication de la demande: 17.06.2020
(73) Titulaire: AIRBUS OPERATIONS (S.A.S.), 31060 Toulouse (FR)
(72) Inventeur: GARDES, Pascal, 31060 TOULOUSE Cedex 9 (FR); SABATHIER, Bastian, 31060 TOULOUSE Cedex 9 (FR); GONCALVES, José, 31060 TOULOUSE Cedex 9 (FR)
(74) Mandataire: Gicquel, Olivier Yves Gérard

(56) Documents cités:
- WO-A1-2011/124793
- US-A- 2 933 890
- US-B2- 7 891 167

## Description

La présente invention concerne un turboréacteur double flux qui comporte une série de lames qui sont montées rotatives pour obturer la veine du flux secondaire, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée.

Bien que les portes d'inversion donnent entière satisfaction, il est souhaitable de trouver des mécanismes différents, en particulier des mécanismes moins lourds.

Le brevet US7891167 décrit un tel mécanisme pour un turboréacteur double flux, mais donne peu de détails sur sa réalisation. En outre, le brevet US2933890 décrit un mécanisme avec un fonctionnement de type iris, mais ce dernier est adapté à un turboréacteur à simple flux.

Un objet de la présente invention est de proposer un mécanisme alternatif à ceux décrits dans ces brevets. A cet effet, est proposé un turboréacteur double flux tel que revendiqué à la revendication 1.

Le turboréacteur double flux selon l'invention comporte une série de lames qui sont montées rotatives pour obturer la veine du flux secondaire. Un tel turboréacteur permet une réduction de masse en remplaçant les portes d'inversion et leurs mécanismes d'entraînement par des lames pivotantes plus légères avec un système de manœuvre simplifié.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant un turboréacteur double flux selon l'invention,
La figure 2 est une vue en perspective du turboréacteur double flux selon l'invention en position avancée et escamotée,
La figure 3 est une vue en perspective du turboréacteur double flux selon l'invention, en position reculée et déployée,
La figure 4 est une représentation schématique d'un turboréacteur double flux selon l'invention vu en coupe par un plan vertical,
La figure 5 est une vue en perspective du détail V de la figure 3,
La figure 6 est une vue en perspective du système de pivot des lames, et
La figure 7 est une vue en perspective de derrière d'un système de transmission selon l'invention.

Dans la description qui suit, les termes relatifs à une position sont pris en référence au sens d'écoulement de l'air dans un turboréacteur qui s'écoule donc de l'avant vers l'arrière de l'aéronef.

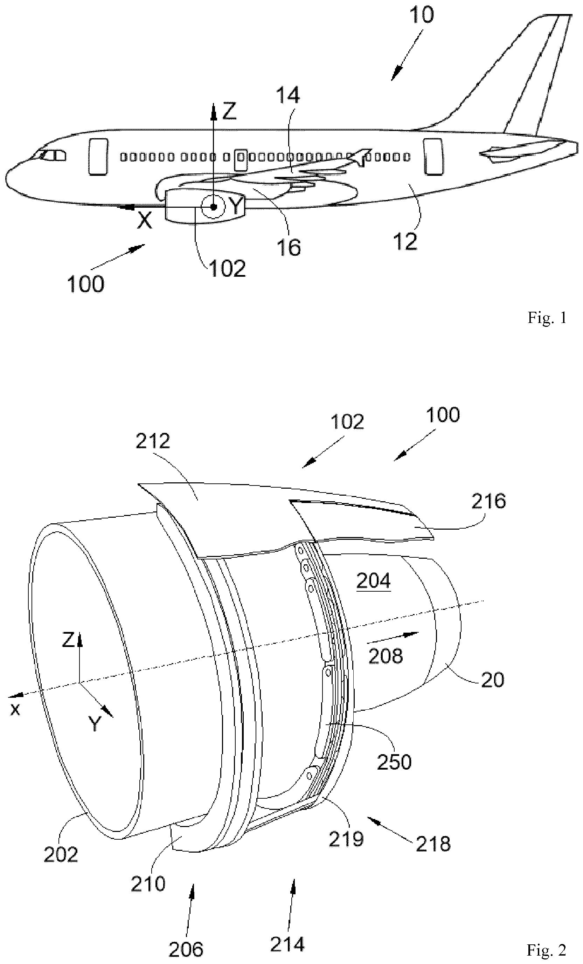

En relation avec la figure 1, un aéronef 10 comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

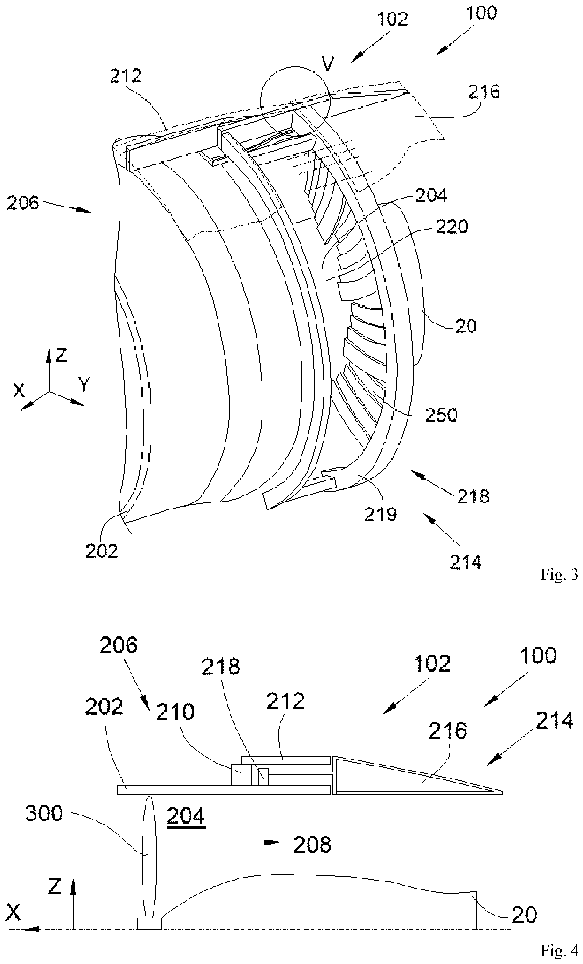

Les figures 2 et 3 montrent le turboréacteur double flux 100 qui présente une nacelle 102 et un moteur 20 qui est logé à l'intérieur de la nacelle 102 et qui comporte un carter de soufflante 202. Le moteur 20 est matérialisé par sa partie arrière d'éjection.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

Les figures 2 et 3 montrent le turboréacteur double flux 100 dans deux positions d'utilisation différentes et la figure 4 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 formant une surface aérodynamique qui sont montrés en transparence sur la figure 3 et dont une partie est découpée sur les figures 2 et 3.

La nacelle 102 présente un ensemble mobile 214 qui présente un capot mobile 216 (également en transparence sur la figure 3) dont une partie est découpée sur les figures 2 et 3 et qui forme les parois extérieures de la tuyère.

La nacelle 102 présente également un coulisseau 218. Le coulisseau 218 prend ici la forme d'un cylindre à parois ajourées. Le capot mobile 216 est fixé au et en aval du coulisseau 218 par rapport au sens d'écoulement du flux d'air dans le turboréacteur double flux 100.

Le coulisseau 218 est monté mobile en translation selon une direction de translation globalement parallèle à l'axe longitudinal X sur la structure fixe 206 de la nacelle 102.

Le coulisseau 218 est mobile entre une position avancée (figure 2) et une position reculée (figure 3) et inversement. En position avancée, le coulisseau 218 est positionné le plus en avant possible par rapport au sens d'écoulement de manière à ce que le capot mobile 216 soit rapproché des panneaux extérieurs 212 et du carter de soufflante 202 et forme ainsi une surface aérodynamique. En position reculée, le coulisseau 218 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100.

La translation du coulisseau 218 est réalisée par tous moyens appropriés, comme par exemple, des systèmes de glissières entre la structure fixe 206 et le coulisseau 218.

La nacelle 102 comporte également un ensemble d'actionneurs (non représentés) assurant le déplacement en translation du coulisseau 218 entre la position avancée et la position reculée et inversement. Chaque actionneur est commandé par une unité de contrôle, par exemple du type processeur, qui commande les déplacements dans un sens ou dans l'autre selon les besoins de l'aéronef 10.

Chaque actionneur peut prendre par exemple la forme d'un vérin à double effet (deux directions de travail) dont le cylindre est fixé à la structure fixe 206 et une tige fixée au coulisseau 218.

Afin d'orienter le flux d'air sortant de la fenêtre 220, des cascades peuvent être fixées sur le coulisseau 218 en regard de la fenêtre 220.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La nacelle 102 comporte une pluralité de lames 250, chacune étant montée mobile en rotation sur le coulisseau 218 autour d'un axe de rotation globalement parallèle à l'axe longitudinal X. Chaque lame 250 est ainsi mobile entre une position escamotée (figure 2) dans laquelle la lame 250 est en dehors de la veine 204 et une position déployée (figure 3) dans laquelle la lame 250 est en travers de la veine 204 afin de dévier le flux secondaire 208 vers la fenêtre 220.

Chaque lame 250 s'étend dans un plan perpendiculaire à l'axe longitudinal X.

Chaque lame 250 est montée mobile sur le pourtour du coulisseau 218. Lorsque les lames 250 sont en position escamotée, elles se superposent selon l'axe longitudinal X, par groupe les unes au-dessus des autres de manière à s'aligner sous une forme circulaire comme représenté sur la figure 2.

Dans le mode de réalisation de l'invention, chaque lame 250 prend la forme d'un haricot mais il est possible d'envisager des formes différentes.

Le nombre de lames 250 ainsi que la forme de chacune d'elles dépendent des dimensions du turboréacteur double flux 100 ainsi que de la largeur de chaque lame 250 afin qu'en position déployée, les lames 250 obturent la plus grande partie de la veine 204.

Chaque lame 250 est montée mobile au niveau d'une première extrémité tandis qu'une deuxième extrémité se rapproche du moteur 20 lorsque la lame 250 est déployée afin d'obturer au mieux la veine 204.

Le passage de la position escamotée à la position déployée s'effectue par une rotation de la lame 250 vers l'intérieur du turboréacteur 100.

La position escamotée peut être adoptée lorsque le coulisseau 218 est en position avancée ou en position reculée. La position déployée ne peut être adoptée que lorsque le coulisseau 218 est en position reculée.

Le coulisseau 218 porte également un système de manœuvre 400 qui déplace chaque lame 250 de la position escamotée à la position déployée et inversement et qui est décrit ci-dessous.

Le fonctionnement consiste ainsi, à partir de la position avancée/escamotée, à commander l'activation des actionneurs pour déplacer le coulisseau 218 de la position avancée à la position reculée, au cours de ce déplacement, le système de manœuvre 400 déplace les lames 250 de la position escamotée à la position déployée.

A l'inverse, le fonctionnement consiste ainsi, à partir de la position reculée/déployée, à commander l'activation des actionneurs pour déplacer le coulisseau 218 de la position reculée à la position avancée, au cours de ce déplacement, le système de manœuvre 400 déplace les lames 250 de la position déployée à la position escamotée.

L'utilisation des lames 250 montées rotatives sur le coulisseau 218 permet un allégement de l'ensemble par rapport à l'utilisation de portes d'inversion de l'état de la technique.

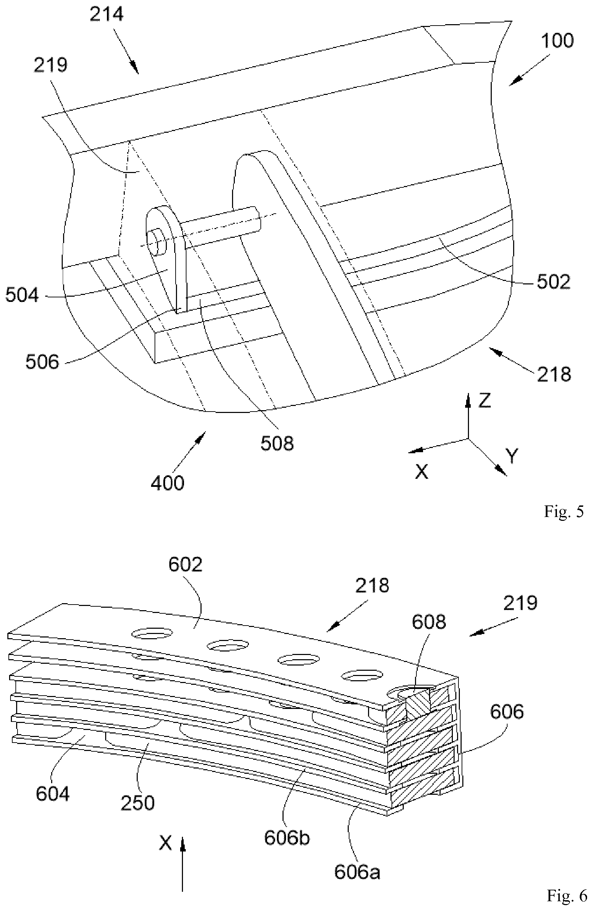

La figure 6 montre un mode de réalisation particulier des liaisons pivot entre les lames 250 et le coulisseau 218.

Comme cela est représenté sur la figure 2, la pluralité de lames 250 est répartie en groupes et dans chaque groupe, les lames 250 se superposent selon l'axe longitudinal X et chaque groupe couvre une ouverture angulaire réduite.

Chaque groupe comporte une première lame 250, qui est située le plus en aval par rapport au sens d'écoulement par rapport aux autres lames 250 du même groupe.

Dans chaque groupe, la lame 250 d'un rang 'n' se situe en amont par rapport à la lame 250 de rang 'n-1' selon le sens d'écoulement et est décalée angulairement autour de l'axe longitudinal X par rapport à la lame 250 de rang 'n-1' pour décaler les axes de rotation des lames 250 les unes par rapport aux autres, le long du pourtour du coulisseau 218. Ici, 'n' est supérieur ou égal à 2.

Préférentiellement, les lames 250 du même ordre se positionnent sur un même étage et dans un même plan radial XZ perpendiculaire à l'axe longitudinal X.

Le nombre de groupes, le nombre de lames 250 par groupe et le décalage angulaire peuvent varier et permettent de couvrir toute la veine 204.

Le coulisseau 218 comporte un profilé en U 219 qui est partiellement retiré sur la figure 2 pour pouvoir visualiser les lames 250. Le profilé en U 219 est coaxial avec l'axe longitudinal X et ouvert vers l'axe longitudinal X. Le profilé en U 219 forme une cage 602 dont uniquement un secteur est représenté à la figure 6. Les lames 250 sont montées mobiles en rotation sur le profilé en U 219.

La cage 602 présente une paroi extérieure 606 formant le fond du U qui prend la forme d'un cylindre ou d'une portion de cylindre selon l'étendue angulaire à couvrir et qui constitue la paroi orientée vers l'extérieur de la nacelle 102. La paroi extérieure 606 est concentrique avec l'axe longitudinal X.

Pour chaque étage de lames 250, la cage 602 présente une fente 604 disposée entre une paroi amont 606b et une paroi aval 606a et ouverte vers l'intérieur de la nacelle 102.

Chaque paroi amont 606b et chaque paroi aval 606a sont dans un plan perpendiculaire à l'axe longitudinal X et forment une couronne ou une portion de couronne concentrique avec l'axe longitudinal X. Les parois extrêmes amont et aval forment les parois du U.

Lorsqu'elles sont en position escamotée, les lames 250 d'un même étage logent dans la fente 604 associée à l'étage.

La liaison pivot autour de laquelle chaque lame 250 est montée pivotante peut prendre différentes formes.

Selon un mode de réalisation particulier, pour chaque lame 250, un arbre 608 solidaire de la lame 250 est monté mobile en rotation au niveau de la première extrémité, entre la paroi amont 606b et la paroi aval 606a de l'étage correspondant à la lame 250 et forme l'axe de rotation de la lame 250.

Selon un autre mode de réalisation, pour chaque lame 250, un arbre 608 est monté fixe entre la paroi amont 606b et la paroi aval 606a de l'étage correspondant à la lame 250, et la lame 250 est montée mobile en rotation autour de l'arbre 608 par un montage ajusté au niveau de la première extrémité. L'arbre 608 forme l'axe de rotation de la lame 250.

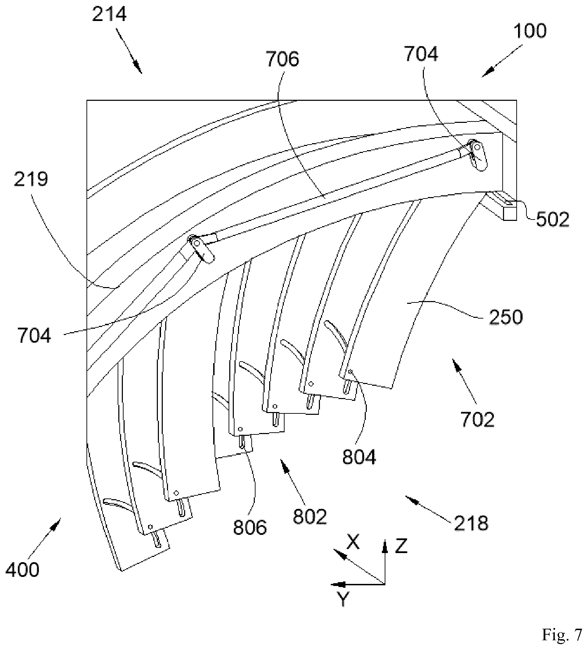

Les figures 5 et 7 montrent le système de manœuvre 400.

La figure 5 montre un agrandissement du détail V où le profilé en U 219 est vu en transparence et la figure 7 montre une vue de derrière du même détail V.

En position escamotée, chaque lame 250 est logée dans le profilé en U 219 et en position déployée, la deuxième extrémité sort du profilé en U 219 pour se rapprocher du moteur 20.

La structure fixe 206 comporte une rainure 502 qui, dans cet exemple, est disposée à 12 heures.

L'une des lames 250 d'un groupe, ici la première lame 250 à partir du haut de la nacelle 102, est équipée d'une came 504 qui présente une dent 506 qui loge dans la rainure 502. Dans le mode de réalisation de l'invention présenté ici, la came 504 est éloignée de la lame 250, mais elle pourrait être intégrée à la lame 250.

Lors du déplacement de l'ensemble mobile 214 vers la position reculée, la dent 506 suit la rainure 502 et une déviation de la rainure 502 entraîne une rotation de la came 504 et donc de la lame 250 autour de son axe de rotation vers sa position déployée et inversement.

La rainure 502 présente une forme qui est adaptée pour permettre la rotation de la lame 250 de la position escamotée à la position déployée lorsque le coulisseau 218 passe de la position avancée à la position reculée. Et réciproquement, la rainure 502 présente une forme qui est adaptée pour permettre la rotation de la lame 250 de la position déployée à la position escamotée lorsque le coulisseau 218 passe de la position reculée à la position avancée.

La rainure 502 présente une extrémité proximale où se positionne la dent 506 lorsque le coulisseau 218 est en position avancée et une extrémité distale où se positionne la dent 506 lorsque le coulisseau 218 est en position reculée.

Pour éviter le déploiement de la lame 250 dès le début de la translation du coulisseau 218 vers sa position reculée, la rainure 502 présente au niveau de son extrémité proximale, une partie rectiligne 508 parallèle à la direction de translation.

Le système de manœuvre 400 comporte ainsi la rainure 502, la came 504, un premier système de transmission 702, et, pour chaque groupe, un deuxième système de transmission 802.

Le premier système de transmission 702 transmet le déplacement de la première lame 250 portant la came 504 à une première lame 250 de chaque autre groupe qui se déplace alors simultanément.

Dans chaque groupe, le deuxième système de transmission 802 transmet le déplacement de la lame 250 portant la came 504 ou déplacée par le premier système de transmission 702, à chacune des autres lames 250 du même groupe.

Ainsi, le déplacement d'une seule lame 250, celle portant la came 504, va entraîner le déplacement de toutes les lames 250.

Le déplacement de toutes les lames 250 est alors relativement simple à mettre en œuvre et il ne nécessite pas d'actionneurs autres que ceux nécessaires au déplacement du coulisseau 218.

Le premier système de transmission 702 comporte, pour deux premières lames 250 de deux groupes voisins, une bielle 706 montée articulée entre lesdites deux premières lames 250. Le point d'articulation de la bielle 706 à chaque première lame 250 est désaxé par rapport à l'axe de rotation de la première lame 250. Ainsi, lorsque l'une des premières lames 250 se déplace, l'autre première lame 250 est entraînée en rotation par la bielle 706.

Dans le mode de réalisation de l'invention présenté ici, les bielles 706 sont à l'extérieur du profilé en U 219 et sont fixées aux premières lames 250 par l'intermédiaire de premières cames 704, où chaque première came 704 est solidaire d'une première lame 250 à travers un alésage du profilé en U 219 prévu à cet effet. Ici, chaque première lame 250 est fixée à la première lame 250 au niveau de son axe de rotation et l'articulation de la bielle 706 est décalée par rapport à cet axe de rotation.

Le deuxième système de transmission 802 comporte pour chaque lame 250 d'un groupe, de la première lame 250 à l'avant dernière lame 250, un plot 804 solidaire de ladite lame 250, s'étendant parallèlement à l'axe longitudinal X et en saillie vers la lame 250 de rang juste supérieur, c'est-à-dire vers l'avant.

Le deuxième système de transmission 802 comporte pour chaque lame 250 d'un groupe, de la deuxième lame 250 à la dernière lame 250, une rainure 806 réalisée dans ladite lame 250 et disposée de manière à loger le plot 804 de la lame 250 de rang juste inférieur. La rainure 806 est ainsi ouverte vers l'arrière.

Ainsi, le plot 804 de la première lame 250 loge dans la rainure 806 de la deuxième lame 250 dont le plot 804 loge dans la rainure 806 de la troisième lame 250 et ainsi de suite.

La forme de la rainure 806 est adaptée pour permettre le déplacement de la lame 250 associée lors du déplacement du plot 804 correspondant. Ainsi pour chaque groupe, le déplacement de la première lame 250 entraîne le déplacement des autres lames 250 dudit groupe.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant un axe longitudinal (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202),
- un ensemble mobile (214) présentant un capot mobile (216),
et l'ensemble mobile comprend un coulisseau (218) auquel est fixé le capot mobile (216), le coulisseau (218) étant mobile en translation sur la structure fixe (206) selon une direction de translation entre une position avancée dans laquelle le coulisseau (218) est positionné de manière à ce que le capot mobile (216) soit rapproché du carter de soufflante (202) et une position reculée dans laquelle le coulisseau (218) est positionné de manière à ce que le capot mobile (216) soit éloigné du carter de soufflante (202) pour définir entre eux une fenêtre (220) ouverte entre la veine (204) et l'extérieur de la nacelle (102),
et la nacelle (102) comprend en outre :
- une pluralité de lames (250), chacune comportant une première extrémité montée mobile en rotation sur le coulisseau (218) autour d'un axe de rotation globalement parallèle à l'axe longitudinal (X), où chaque lame (250) est mobile entre une position escamotée dans laquelle la lame (250) est en dehors de la veine (204) et une position déployée dans laquelle la lame (250) est en travers de la veine (204), où ladite pluralité de lames (250) est répartie en groupes, où chaque groupe comporte une première lame (250) située le plus en aval par rapport au sens d'écoulement par rapport aux autres lames (250) du même groupe, où pour chaque groupe, la lame (250) d'un rang 'n' se situe en amont par rapport à la lame (250) de rang 'n-1' selon le sens d'écoulement et est décalée angulairement autour de l'axe longitudinal X par rapport à la lame (250) de rang 'n-1',
- un ensemble d'actionneurs assurant le déplacement du coulisseau (218) entre la position avancée et la position reculée, et inversement, et
- un système de manœuvre (400) destiné à déplacer chaque lame (250) de la position escamotée à la position déployée et inversement, où le système de manœuvre (400) comporte :
- une came (504) solidaire de la première lame (250) de l'un des groupes et présentant une dent (506),
- une rainure (502) solidaire de la structure fixe (206) dans laquelle loge la dent (506) et où lors du déplacement de l'ensemble mobile (214), la dent (506) suit la rainure (502) et déplace en rotation ladite première lame (250),
- un premier système de transmission (702) qui transmet le déplacement de la première lame (250) portant la came (504) à une première lame (250) de chaque autre groupe, et
- pour chaque groupe, un deuxième système de transmission (802) qui transmet le déplacement de la lame (250) portant la came (504) ou déplacée par le premier système de transmission (702), à chacune des autres lames (250) dudit groupe.

2. Turboréacteur double flux (100) selon la revendication 1, **caractérisé en ce que** le capot mobile (216) comporte un profilé en U (219) coaxial avec l'axe longitudinal (X) et ouvert vers l'axe longitudinal (X), **en ce que** les lames (250) sont montées mobiles en rotation sur le profilé en U (219), **en ce qu'**en position escamotée, chaque lame (250) est logée dans le profilé en U (219) et **en ce qu'**en position déployée, une deuxième extrémité de chaque lame (250) sort du profilé en U (219).

3. Turboréacteur double flux (100) selon l'une des revendications 1 ou 2, **caractérisé en ce que** la rainure (502) présente une extrémité proximale où se positionne la dent (506) lorsque le coulisseau (218) est en position avancée et, **en ce que** la rainure (502) présente au niveau de son extrémité proximale, une partie rectiligne (508) parallèle à la direction de translation.

4. Turboréacteur double flux (100) selon l'une des revendications précédentes, **caractérisé en ce que** le premier système de transmission (702) comporte, pour deux premières lames (250) de deux groupes voisins, une bielle (706) montée articulée entre lesdites deux premières lames (250), et **en ce que** le point d'articulation de la bielle (706) à chaque première lame (250) est désaxé par rapport à l'axe de rotation de la première lame (250).

5. Turboréacteur double flux (100) selon l'une des revendications précédentes, **caractérisé en ce que** le deuxième système de transmission (802) comporte pour chaque lame (250) d'un groupe, de la première lame (250) à l'avant dernière lame (250), un plot (804) solidaire de ladite lame (250), s'étendant parallèlement à l'axe longitudinal (X) et en saillie vers la lame (250) de rang juste supérieur, **en ce que** le deuxième système de transmission (802) comporte pour chaque lame (250) d'un groupe, de la deuxième lame (250) à la dernière lame (250), une rainure (806) réalisée dans ladite lame (250) et disposée de manière à loger le plot (804) de la lame (250) de rang juste inférieur.

6. Aéronef (10) comportant au moins un turboréacteur double flux (100) selon l'une des revendications précédentes.

## Patentansprüche

1. Zweistrom-Turbotriebwerk (100) aufweisend eine Längsachse (X) und umfassend einen Motor (20) und eine Gondel (102), die den Motor (20) umgibt, der ein Bläsergehäuse (202) aufweist, wobei ein Kanal (204) eines Sekundärstroms (208) zwischen der Gondel (102) und dem Motor (20) begrenzt ist, und wobei ein Luftstrom in einer Strömungsrichtung strömt, wobei die Gondel (102) Folgendes aufweist:
- eine feste Struktur (206), die am Bläsergehäuse (202) befestigt ist,
- eine bewegliche Anordnung (214), die eine bewegliche Verkleidung (216) aufweist,
und die bewegliche Anordnung einen Schieber (218) umfasst, an dem die bewegliche Verkleidung (216) befestigt ist, wobei der Schieber (218) auf der festen Struktur (206) in einer Translationsrichtung zwischen einer vorgeschobenen Position, in welcher der Schieber (218) so positioniert ist, dass die bewegliche Verkleidung (216) dem Bläsergehäuse (202) angenähert ist, und einer zurückgeschobenen Position translatorisch beweglich ist, in welcher der Schieber (218) so positioniert ist, dass die bewegliche Verkleidung (216) vom Bläsergehäuse (202) entfernt ist, um zwischen ihnen ein offenes Fenster (220) zwischen dem Kanal (204) und dem Äußeren der Gondel (102) zu definieren,
und die Gondel (102) ferner Folgendes umfasst:
- eine Mehrzahl von Blättern (250), die jeweils ein erstes Ende aufweisen, das auf dem Schieber (218) um eine Drehachse drehbeweglich gelagert ist, die allgemein parallel zur Längsachse (X) verläuft, wobei jedes Blatt (250) zwischen einer eingefahrenen Position, in welcher sich das Blatt (250) außerhalb des Kanals (204) befindet, und einer ausgefahrenen Position, in welcher sich das Blatt (250) quer zum Kanal (204) befindet, beweglich ist, wobei die Mehrzahl von Blättern (250) in Gruppen aufgeteilt ist, wobei jede Gruppe ein erstes Blatt (250) aufweist, das sich am weitesten stromab bezogen auf die Strömungsrichtung bezogen auf die anderen Blätter (250) derselben Gruppe befindet, wobei sich für jede Gruppe das Blatt (250) eines Rangs 'n' stromauf bezogen auf das Blatt (250) eines Rangs 'n-1' in der Strömungsrichtung befindet und um die Längsachse X bezogen auf das Blatt (250) des Rangs 'n-1' winkelversetzt ist,
- eine Aktorenanordnung, die die Bewegung des Schiebers (218) zwischen der vorgeschobenen Position und der zurückgeschobenen Position und umgekehrt sicherstellt, und
- ein Manövriersystem (400), das dazu bestimmt ist, jedes Blatt (250) aus der eingefahrenen Position zur ausgefahrenen Position und umgekehrt zu bewegen, wobei das Manövriersystem (400) Folgendes aufweist:
- einen Nocken (504), der mit dem ersten Blatt (250) einer der Gruppen fest verbunden ist und einen Zahn (506) aufweist,
- eine Rille (502), die mit der festen Struktur (206) fest verbunden ist, in welcher der Zahn (506) aufgenommen ist, und wo bei der Bewegung der beweglichen Anordnung (214) der Zahn (506) der Rille (502) folgt und das erste Blatt (250) drehend bewegt,
- ein erstes Übertragungssystem (702), das die Bewegung des ersten Blatts (250), das den Nocken (504) trägt, auf ein erstes Blatt (250) jeder anderen Gruppe überträgt, und
- für jede Gruppe ein zweites Übertragungssystem (802), das die Bewegung des Blatts (250), das den Nocken (504) trägt oder vom ersten Übertragungssystem (702) bewegt wird, auf jedes der anderen Blätter (250) der Gruppe überträgt.

2. Zweistrom-Turbotriebwerk (100) nach Anspruch 1, **dadurch gekennzeichnet, dass** die bewegliche Verkleidung (216) ein U-förmiges Profil (219) aufweist, das koaxial zur Längsachse (X) verläuft und zur Längsachse (X) offen ist, dadurch, dass die Blätter (250) auf dem U-förmigen Profil (219) drehbeweglich gelagert sind, dadurch, dass in der eingefahrenen Position jedes Blatt (250) im U-förmigen Profil (219) aufgenommen ist, und dadurch, dass in der ausgefahrenen Position ein zweites Ende jedes Blatts (250) auf dem U-förmigen Profil (219) heraustritt.

3. Zweistrom-Turbotriebwerk (100) nach einem der Ansprüche 1 oder 2, **dadurch gekennzeichnet, dass** die Rille (502) ein proximales Ende aufweist, wo der Zahn (506) positioniert ist, wenn sich der Schieber (218) in der vorgeschobenen Position befindet, und dadurch, dass die Rille (502) an ihrem proximalen Ende einen geradlinigen Abschnitt (508) aufweist, der parallel zur Translationsrichtung verläuft.

4. Zweistrom-Turbotriebwerk (100) nach einem der vorhergehenden Ansprüche, **dadurch gekennzeichnet, dass** das erste Übertragungssystem (702) für zwei erste Blätter (250) zweier Nachbargruppen ein Pleuel (706) aufweist, das zwischen den zwei ersten Blättern (250) angelenkt angebracht ist, und dadurch, dass der Gelenkpunkt des Pleuels (706) an jedem ersten Blatt (250) bezogen auf die Drehachse des ersten Blatts (250) achsenversetzt ist.

5. Zweistrom-Turbotriebwerk (100) nach einem der vorhergehenden Ansprüche, **dadurch gekennzeichnet, dass** das zweite Übertragungssystem (802) für jedes Blatt (250) einer Gruppe vom ersten Blatt (250) zum vorletzten Blatt (250) einen Stift (804) aufweist, der mit dem Blatt (250) fest verbunden ist, der sich parallel zur Längsachse (X) und abstehend zum Blatt (250) unmittelbar höheren Rangs erstreckt, dadurch, dass das zweite Übertragungssystem (802) für jedes Blatt (250) einer Gruppe vom zweiten Blatt (250) zum letzten Blatt (250) eine Rille (806) aufweist, die in dem Blatt (250) ausgebildet ist und so angeordnet ist, dass sie den Stift (804) des Blatts (250) unmittelbar niedrigeren Rangs aufnimmt.

6. Luftfahrzeug (10), aufweisend mindestens ein Zweistrom-Turbotriebwerk (100) nach einem der vorhergehenden Ansprüche.

## Claims

1. Dual-flow jet engine (100) having a longitudinal axis (X) and comprising an engine (20) and a nacelle (102) surrounding the engine (20) which comprises a fan casing (202), in which a stream (204) of a bypass flow (208) is delimited between the nacelle (102) and the engine (20) and in which an air stream circulates in a direction of flow, said nacelle (102) comprising:
- a fixed structure (206) fixed to the fan casing (202),
- a movable assembly (214) having a movable cowl (216),
and the movable assembly comprises a slide (218) to which the movable cowl (216) is fixed, the slide (218) being movable in translation on the fixed structure (206) in a direction of translation between an advanced position in which the slide (218) is positioned in such a way that the movable cowl (216) is close to the fan casing (202) and a retracted position in which the slide (218) is positioned in such a way that the movable cowl (216) is away from the fan casing (202) to define between them an open window (220) between the stream (204) and the outside of the nacelle (102),
and the nacelle (102) further comprises:
- a plurality of blades (250) each comprising a first end mounted to be movable in rotation on the slide (218) about an axis of rotation that is overall parallel to the longitudinal axis (X), in which each blade (250) is movable between a stowed position in which the blade (250) is outside of the stream (204) and a deployed position in which the blade (250) is across the stream (204), in which said plurality of blades (250) is divided up into groups, in which each group comprises a first blade (250) situated furthest downstream with respect to the direction of flow with respect to the other blades (250) of the same group, in which, for each group, the blade (250) of a rank 'n' is situated upstream with respect to the blade (250) of rank 'n-1' in the direction of flow and is offset angularly about the longitudinal axis X with respect to the blade (250) of rank 'n-1',
- a set of actuators ensuring the displacement of the slide (218) between the advanced position and the retracted position, and vice versa, and
- a manoeuvring system (400) intended to displace each blade (250) from the stowed position to the deployed position and vice versa, in which the manoeuvring system (400) comprises:
- a cam (504) integral to the first blade (250) of one of the groups and having a tooth (506),
- a groove (502) integral to the fixed structure (206) in which the tooth (506) is housed and in which, during the displacement of the movable assembly (214), the tooth (506) follows the groove (502) and rotationally displaces said first blade (250),
- a first transmission system (702) which transmits the displacement of the first blade (250) bearing the cam (504) to a first blade (250) of each other group, and
- for each group, a second transmission system (802) which transmits the displacement of the blade (250) bearing the cam (504) or displaced by the first transmission system (702) to each of the other blades (250) of said group.

2. Dual-flow jet engine (100) according to Claim 1, **characterized in that** the movable cowl (216) comprises a U-shaped profile (219) coaxial with the longitudinal axis (X) and open towards the longitudinal axis (X), **in that** the blades (250) are mounted to be movable in rotation on the U-shaped profile (219), **in that**, in stowed position, each blade (250) is housed in the U-shaped profile (219), and **in that**, in deployed position, a second end of each blade (250) leaves the U-shaped profile (219).

3. Dual-flow jet engine (100) according to one of Claims 1 and 2, **characterized in that** the groove (502) has a proximal end where the tooth (506) is positioned when the slide (218) is in advanced position, and **in that** the groove (502) has, at its proximal end, a rectilinear part (508) parallel to the direction of translation.

4. Dual-flow jet engine (100) according to one of the preceding claims, **characterized in that** the first transmission system (702) comprises, for two first blades (250) of two adjacent groups, a connecting rod (706) mounted articulated between said two first blades (250), and **in that** the point of articulation of the connecting rod (706) at each first blade (250) is offset with respect to the axis of rotation of the first blade (250).

5. Dual-flow jet engine (100) according to one of the preceding claims, **characterized in that** the second transmission system (802) comprises, for each blade (250) of a group, from the first blade (250) to the penultimate blade (250), a stud (804) integral to said blade (250), extending parallel to the longitudinal axis (X) and protruding towards the blade (250) of immediately higher rank, **in that** the second transmission system (802) comprises, for each blade (250) of a group, from the second blade (250) to the last blade (250), a groove (806) produced in said blade (250) and arranged so as to house the stud (804) of the blade (250) of immediately lower rank.

6. Aircraft (10) comprising at least one dual-flow jet engine (100) according to one of the preceding claims.
